# EUROPÄISCHE PATENTSCHRIFT

(11) **EP 0 828 577 B1**
(45) Veröffentlichungstag und Bekanntmachung des Hinweises auf die Patenterteilung: **13.01.1999**
(21) Anmeldenummer: 96916063.9
(22) Anmeldetag: 14.05.1996
(51) Int. Cl.: B22F 1/00, B22F 9/20, C22B 23/00, H01M 4/38, H01M 4/52

(54) **KOBALTMETALLAGGLOMERATE, VERFAHREN ZU IHRER HERSTELLUNG SOWIE DEREN VERWENDUNG**
COBALT METAL AGGLOMERATES, PROCESS FOR PRODUCING THE SAME AND THEIR USE
AGGLOMERATS DE COBALT METALLIQUE, LEUR PROCEDE DE PRODUCTION ET LEUR UTILISATION

(30) Priorität: 26.05.1995 DE 19519329
(43) Veröffentlichungstag der Anmeldung: 18.03.1998
(73) Patentinhaber: H.C. Starck GmbH & Co. KG, 38642 Goslar (DE)
(72) Erfinder: GÖRGE, Astrid, D-38640 Goslar (DE); PLAGA, Katrin, D-38640 Goslar (DE); OLBRICH, Armin, D-38723 Seesen (DE); NAUMANN, Dirk, D-38667 Bad Harzburg (DE); GUTKNECHT, Wilfried, D-38642 Goslar (DE); SCHMOLL, Josef, D-38642 Goslar (DE)
(74) Vertreter: Drope, Rüdiger, Dr.
(86) Internationale Anmeldenummer: EP9602053
(87) Internationale Veröffentlichungsnummer: WO9637325

(56) Entgegenhaltungen:
- DE-C- 4 343 594
- US-A- 4 093 450
- PMAI NEWS LETTER, Bd. 4, Nr. 4, September 1979, Seiten 17-21, XP000600537 KAMESWARI: "Preparation and Characterization of fine Cobalt metal and Oxide Powders"

## Beschreibung

Die vorliegende Erfindung betrifft Kobaltmetallagglomerate, bestehend aus erdnußförmigen Primärteilchen mit mittleren Teilchengrößen im Bereich von 0,5 bis 2 µm, Verfahren zu ihrer Herstellung sowie deren Verwendung.

Feinteiliges Kobaltmetall wird hauptsächlich als Binder bei der Herstellung von Hartmetall- und Schneidwerkzeugen auf Basis verschiedener Hartstoffe, wie z.B. WC, Diamant, SiC und CBN eingesetzt. Dabei müssen die z.B. in der Diamantwerkzeugherstellung eingesetzten Kobaltmetalle spezielle Anforderungen erfüllen. Diese sehen zum einem vor, daß Verunreinigungen wie Al, Ca, Mg, S und Si vermieden werden sollten, da diese Elemente leicht mit dem Restsauerstoff des Kobaltmetallpulvers stabile Oxide bilden und somit eine unerwünschte Porosität in den Segmenten verursachen.

Zum anderen ist es erforderlich, speziell bei der Herstellung von Segmenten mit synthetischen Diamanten, nur sehr sinteraktives Kobaltmetallpulver einzusetzen, da hier Mindestdichten von 8,5 g/cm³ gefordert werden. Diese Dichten sollten bereits in einem Sinterbereich < 900°C erzielt werden, da bei höheren Temperaturen eine Umwandlung des Diamanten zu Graphit erfolgen kann. Besitzt das Kobaltmetall keine ausreichenden Sinteraktivitäten, werden nicht die erforderlichen Härten erreicht. Dies führt bei der extremen Beanspruchung von Bohrkronen oder Schneidwerkzeugen durch die abrasive Wirkung des Gesteinstaubes zu tiefen Auskolkungen, welche ein unerwünschtes Ausbrechen der Diamanten oder anderer Hartstoffe und damit den Verlust der Schneidleistung nach sich ziehen.

Nach dem Stand der Technik werden Kobaltmetalle zum einem in Form von Mischungen aus verdüsten Kobaltmetallpulvern mit wasserstoffreduzierten Pulvern eingesetzt, wie sie in der DE-A 4 343 594 offenbart sind, zum anderen als Kobaltmetallpulver der Qualität ultrafein und extrafein.

Ultrafeine Pulver unterscheiden sich aufgrund ihres FSSS-Wertes von < 1.0 µm von den extrafeinen Pulvern, deren FSSS-Werte zwischen 1,2-1,4 µm liegen

Bedingt durch die geringen Teilchengrößen und die daraus resultierenden großen Oberflächen wird bei den beschriebenen Kobaltmetallpulvern die Aufnahme von Luftsauerstoff und Feuchtigkeit begünstigt, was häufig zu einer Verschlechterung der Fließfähigkeit der Pulver fuhrt.

Es war daher Aufgabe der vorliegenden Erfindung, ein sinteraktives Kobaltmetall zur Verfügung zu stellen, welches die erwähnten Nachteile nicht aufweist, aber die Herstellung von Segmenten mit hoher Dichte und Härte gewährleistet.

Es konnte nun ein Kobaltmetallpulver bereitgestellt werden, das diese geforderten Eigenschaften aufweist. Es handelt sich hierbei um Kobaltmetallagglomerate, bestehend aus erdnußförmigen Primärteilchen mit mittleren Teilchengrößen im Bereich von 0,5 bis 2 µm, dadurch gekennzeichnet, daß sie eine sphärische Sekundärstruktur mit mittleren Agglomeratdurchmessern von 3 bis 50 µm aufweisen. Diese Kobaltagglomerate sind Gegenstand dieser Erfindung. Bevorzugt beträgt der Agglomeratdurchmesser der erfindungsgemäßen Kobaltmetallagglomerate 5 bis 20 µm. Aufgrund ihrer sphärischen Sekundärstruktur zeichnen sie sich durch ein gutes Fließverhalten aus.

Die ungleichmäßig länglich geformten Primärpartikel weisen eine mittlere Teilchenlänge von 0,5 bis 2 µm und im allgemeinen einen Durchmesser von < 0,5 µm auf.

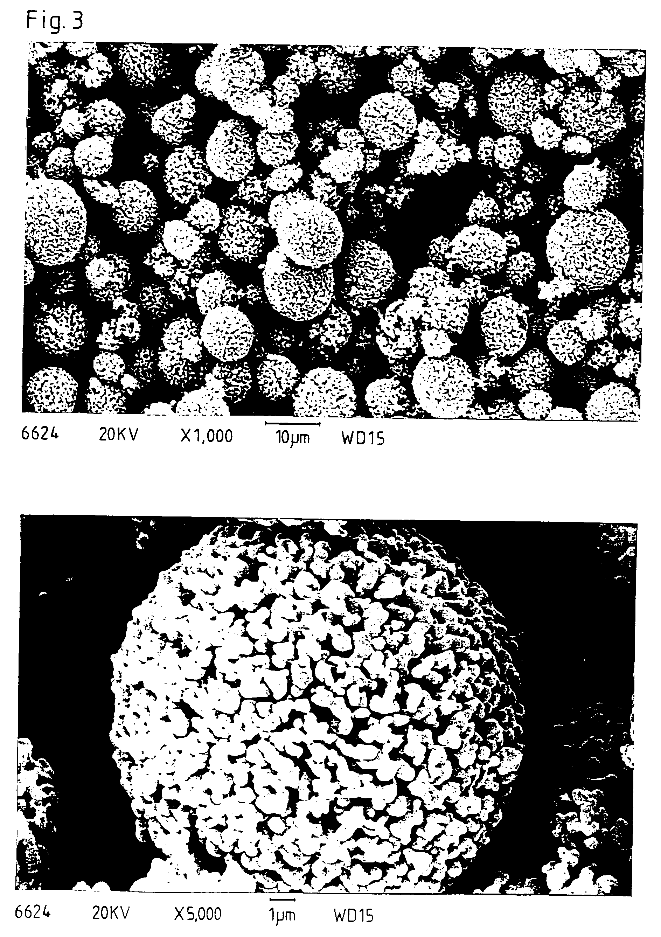

Fig. 3 zeigt rasterelektronenmikroskopische Aufnahmen der erfindungsgemäßen Kobaltmetallpulveragglomerate hergestellt nach Beispiel 3 in 1000- und 5000-facher Vergrößerung.

Die spezifischen Oberflächen der erfindungsgemäßen Kobaltmetallagglomerate (bestimmt nach der Stickstoff-1-Punkt-Methode gemäß DIN 66 131) betragen bevorzugt 2 bis 3,5 m²/g. Diese Oberflächen und die geringen Teilchengrößen der Primärteilchen sind verantwortlich für die hohe Sinteraktivität der erfindungsgemäßen Kobaltmetallagglomerate, aus denen bereits bei Temperaturen von 700°C Sinterkörper mit Dichten von 8,5 g/cm³ erzielt werden können.

Gegenstand der Erfindung ist auch ein Verfahren zur Herstellung der erfindungsgemäßen Kobaltmetallagglomerate. Dieses Verfahren ist dadurch gekennzeichnet, daß in einem ersten Schritt in einem kontinuierlich betriebenen Durchflußrührreaktor unter starkem Rühren eine wäßrige Kobalt(II)-Salzlösung der allgemeinen Formel CoX₂, wobei X⁻ = Cl⁻, NO₃⁻ und/oder 1/2 SO₄²⁻, mit wäßrigen Lösungen oder Suspensionen von Alkali- und/oder Ammoniumcarbonaten und/oder - hydrogencarbonaten umgesetzt wird. Der Temperaturbereich für die Umsetzung liegt dabei zwischen 40 und 100°C, bevorzugt zwischen 60 und 90°C. Hierbei entsteht nun im Gegensatz zu den üblichen Fällverfahren kein stäbchenförmige kristallisiertes Kobaltcarbonat, sondern ein sphärisches basisches Kobaltcarbonat. Dieses wird filtriert und neutralsalzfrei gewaschen. Um den Gehalt der für die weitere Verwendung kritischen Verunreinigungen zu minimieren, kann das erhaltene basische Kobaltcarbonat in einem weiteren Verfahrensschritt durch Zugabe von Alkali und/oder Ammoniaklaugen zu sphärischem Kobalt(II)hydroxid umgesetzt werden. Falls entsprechend reine Lösungen bei der Bildung des Kobaltcarbonates eingesetzt werden, erübrigt sich dieser Verfahrensschritt. Auf diesem Wege erhaltenes Kobalt(II)hydroxid bzw. basisches Kobaltcarbonat wird anschließend der Reduktion unterworfen. Dabei wird die Umsetzung mit gasförmigen Reduktionsmittel, wie bevorzugt Wasserstoff, Methan, Distickstoffoxid und/oder Kohlenmonoxid, bei Ofentemperaturen von 300 bis 800°C, bevorzugt 350 bis 650°C, durchgeführt.

Im Gegensatz zu den üblichen bekannten extrafeinen und ultrafeinen Kobaltpulvern, weisen die erfindungsgemäßen Kobaltmetallagglomerate aufgrund ihrer sphärischen Sekundärstruktur ein sehr gutes Fließverhalten auf.

Aufgrund der beschriebenen Eigenschaften eignen sich die erfindungsgemäßen Kobaltmetallpulver besonders als Binder bei der Hartmetall- und/oder Diamantwerkzeugherstellung. Es ist zu bemerken, daß die erfindungsgemäßen Kobaltmetallpulveragglomerate hierbei vorteilhaft sowohl allein, als auch in Kombination mit anderen Bindermetallen eingesetzt werden können.

Gegenstand dieser Erfindung sind somit die Verwendung der erfindungsgemäßen Kobaltmetallagglomerate zur Herstellung von Kobalt-Sinterkörpern sowie zur Herstellung von Verbundsinterkörpern auf Basis von Kobaltmetall und Hartstoffen aus der Gruppe Diamant, CBN, WC, SiC und Al₂O₃.

Aufgrund der guten Fließeigenschaften und der feinen Primärstruktur der erfindungsgemäßen Kobaltmetallpulveragglomerate eignen sie sich auch in besonderer Weise zur Einarbeitung in die positive nickelhydroxidhaltige Elektrodenmasse wiederaufladbarer Battterien, basierend auf Nickel-Cadmium- bzw. Nickel-Metall-hydrid-Technologien.

In den sogenannten Formierzyklen wird das Kobaltmetall entsprechend seinem Potential zunächst zu Kobalt(II) oxodiert. Dieses bildet im alkalischen Elektrolyten (30 %ige KOH-Lösung) lösliche Kobaltate(II) und wird so gleichmäßig in der Elektrodenmasse verteilt. Bei weiterer Ladung wird es letztendlich als elektrisch leitfähige CoO(OH)-Schicht auf den Nickelhydroxid-Partikeln abgeschieden und bewirkt so erst die gewünschte hohe Massenausnutzung des Nickelhydroxids im Akkumulator. Die beschriebene anodische Auflösung des Kobaltmetallpulvers verläuft naturgemäß umso schneller und effektiver, je feiner die Primärstuktur bzw. je größer die Oberfläche des Metallpulvers ist.

Gegenstand dieser Erfindung ist somit auch die Verwendung der erfindungsgemäßen Kobaltmetallagglomerate als Komponente zur Herstellung der positiven Elektrode in alkalischen Sekundärbatterien auf Basis-Nickel-Cadmium oder Nickel-Metallhydrid-Technologien.

Im folgenden wird die Erfindung anhand von Beispielen erläutert, ohne daß hierin eine Einschränkung zu sehen ist.

### Beispiele

### Beispiel 1

In einem Durchflußrührreaktor wurden 20 l Wasser vorgelegt und auf 80°C erhitzt. Hierzu wurden 5 l/h einer 1,7 molaren CoCl₂-Lösung sowie 19 l/h einer 0,9 molaren NaHCO₃-Lösung unter kräftigem Rühren kontinuierlich eindosiert. Nach Erreichen des stationären Zustandes wurde aus dem Überlauf des Reaktors das entstandene Produkt abgezogen, filtriert und mit Wasser neutralsalzfrei gewaschen. Hiernach wurde bei T = 80°C bis zur Gewichtskonstanz getrocknet.

Das so erhaltene basische Kobaltcarbonat zeigte in der chemischen Analyse einen Co-Gehalt von 54,3 %, der Gehalt des Carbonates wurde mit 32,3 % bestimmt.

### Beispiel 2

500 g basisches Kobaltcarbonat, hergestellt gemäß Beispiel 1, wurden in 1,5 l Wasser suspendiert. Diese Suspension wurde unter kräftigen, Rühren mit 200 g NaOH, gelöst in 500 ml Wasser, versetzt. Anschließend wurde auf 60°C erhitzt und 1 h gerührt. Es wurde filtriert, gewaschen und bei T = 90°C bis zur Gewichtskonstanz getrocknet.

Die Ausbeute betrug 426 g eines sphärisch agglomerierten, phasenreinen Kobalt(II)hydroxides mit einem Co-Gehalt von 63,3 %.

### Beispiel 3

200 g sphärisches Kobalt(II)hydroxid, hergestellt gemäß Beispiel 2, wurden in ein Quarzschiffchen eingewogen und 1 h bei T = 700°C im Wasserstoffstrom reduziert. Man erhielt 126 g sphärisch agglomeriertes Kobaltmetall. Fig. 3 zeigt rasterelektronische Aufnahmen in 1000- und 5000-facher Vergrößerung.

### Beispiel 4

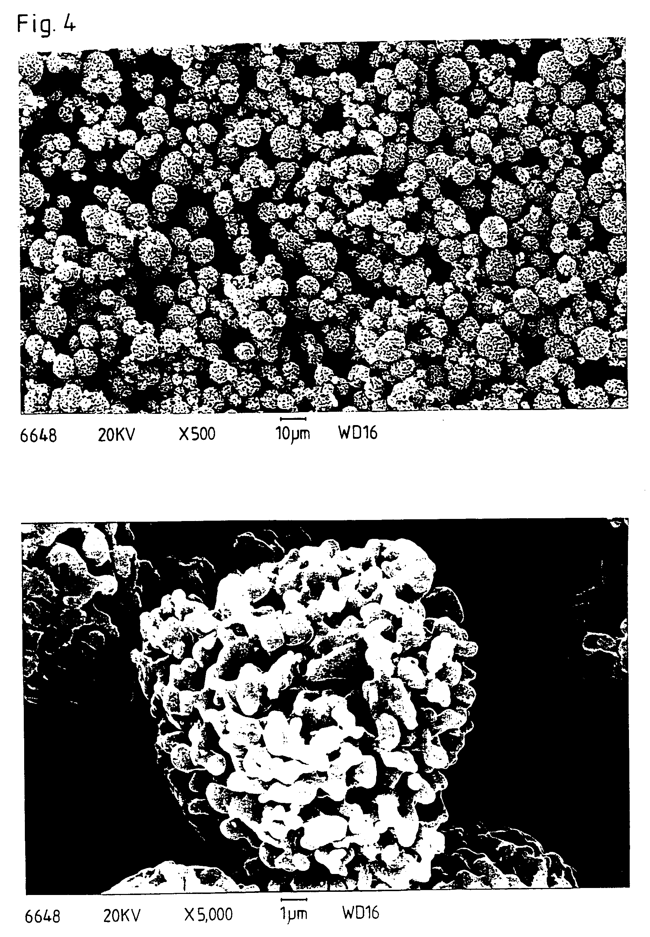

100 g sphärisches basisches Kobaltcarbonat, hergestellt gemäß Beispiel 1, wurden analog Beispiel 3 behandelt. Die Ausbeute betrug 54 g sphärisches Kobaltmetallpulver. Fig 4 zeigt hiervon rasterelektronische Aufnahmen in 500- und 5000-facher Vergrößerung.

### Beispiel 5

### Sintertests

Die nach Beispiel 3 erhaltenen Kobaltmetallagglomerate wurden unter folgenden Bedingungen Heißpreßtests unterworfen:
- Eingesetzte Apparatur:: DSP 25-ATV (Fa. Dr. Fritsch GmbH)
- Aufheizzeit auf Endtemp.:: 3 min
- Haltezeit:: 3 min
- Enddruck:: 350 N/mm²
- Endtemperatur:: siehe Tabelle 1 und 2
- Abmessungen:: 40 x 4 x 10 mm

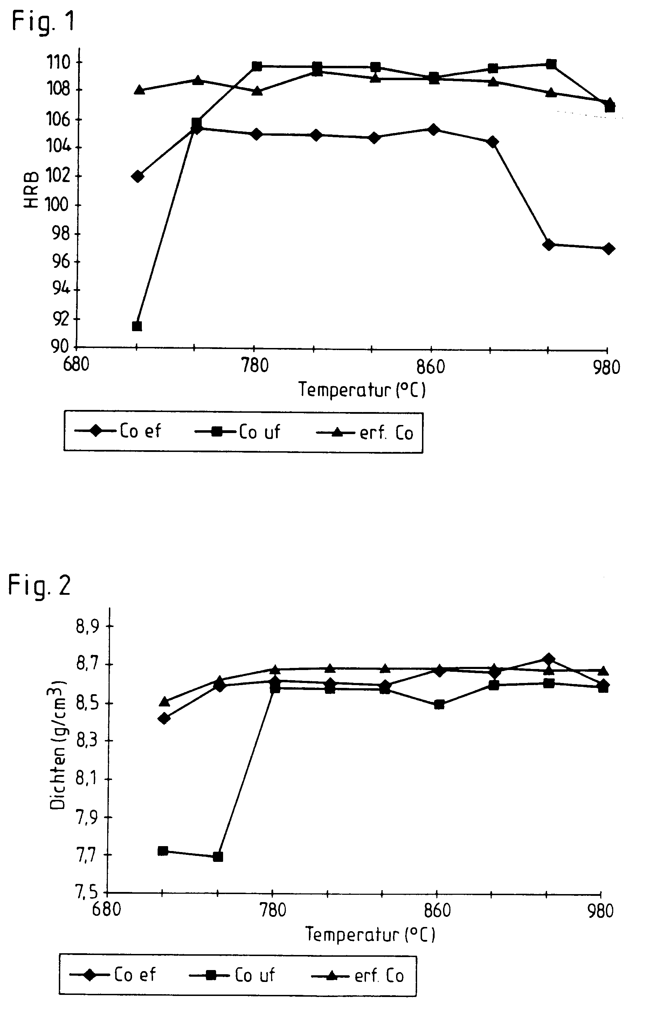

Tabelle 1 und Figur 1 zeigen die Härten eines Sinterkörpers, hergestellt aus dem erfindungsgemäßen Kobaltmetallpulveragglomerat aus Beispiel 3, im Vergleich zu Sinterkörpern, hergestellt aus kommerziell erhältlichen ultra- und extrafeinen Kobaltmetallpulvern, in Abhängigkeit von den Sintertemperaturen. Man erkennt deutlich, daß mit dem erfindungsgemäßen Kobaltmetallpulver schon bei Sintertemperaturen von 700°C hohe Härten erzielt werden, die zudem über den gesamten Temperaturbereich bis 980°C konstant bleiben.

**Tabelle 1**

| (Härten) Rockwell-Härten (HR_{B}) | | | | | |
|---|---|---|---|---|---|
| | 700°C | 780°C | 800°C | 900°C | 980°C |
| Co uF¹⁾ | 91,5 | 109,8 | - | 109,7 | 107 |
| Co eF²⁾ | 102,5 | 105 | - | 104,6 | 97,2 |
| Kobaltmetallpulver aus Beispiel 3 | 107,9 | - | 109,4 | 108,8 | 107,4 |

| | | | | | |
|---|---|---|---|---|---|
| ¹⁾ Kobaltmetallpulver ultrafein ex Fa. Eurotungstene Grenoble, Frankreich | | | | | |
| ²⁾ Kobaltmetallpulver extrafein ex Fa. Hoboken Overpelt, Belgien | | | | | |

Tabelle 2 und Figur 2 zeigen die Dichten eines Sinterkörpers, hergestellt aus dem erfindungsgemäßen Kobaltmetallpulveragglomerat aus Beispiel 3, im Vergleich zu Sinterkörpern, hergestellt aus kommerziell erhältlichen ultra- und extrafeinen Kobaltmetallpulvern, in Abhängigkeit von den Sintertemperaturen.

**Tabelle 2**

| (Dichten) Dichten [g/cm³] | | | | | |
|---|---|---|---|---|---|
| | 700°C | 780°C | 800°C | 900°C | 980°C |
| Co uF¹⁾ | 7,72 | 8,58 | - | 8,60 | 8,59 |
| Co eF²⁾ | 8,42 | 8,62 | - | 8,67 | 8,61 |
| Kobaltmetallpulveragglomerat aus Beispiel 3 | 8,51 | - | 8,69 | 8,69 | 8,68 |

In der Tabelle 3 sind die Teilchengrößen und spezifischen BET-Oberflächen der Kobaltmetallagglomerate (bestimmt nach der Stickstoff-1-Punkt-Methode gemäß DIN 66 131) aus Beispiel 3 denen kommerziell erhältlicher ultra- und extrafeiner Kobaltpulver gegenübergestellt.

**Tabelle 3**

| (Teilchengröße und spezifische Oberflächen) | | |
|---|---|---|
| | FSSS [µm] | BET [m²/g] |
| Co uF¹⁾ | < 1 | 1,4 |
| Co eF²⁾ | 1,2 - 1,4 | 0,8 - 1,0 |
| Kobaltmetallpulveragglomerat aus Beispiel 3 | 1 | 2,5 - 3,5 |

## Patentansprüche

1. Kobaltmetallagglomerate, bestehend aus erdnußförmigen Primärteilchen mit mittleren Teilchengrößen im Bereich von 0,5 bis 2 µm, dadurch gekennzeichnet, daß sie eine sphärische Sekundärstruktur mit mittleren Agglomeratdurchmessern von 3 bis 50 µm aufweisen.

2. Kobaltmetallagglomerate gemäß Anspruch 1, dadurch gekennzeichnet, daß die Agglomeratdurchmesser 5 bis 20 µm betragen.

3. Kobaltmetallagglomerate gemäß einem der Ansprüche 1 oder 2, dadurch gekennzeichnet, daß sie eine spezifische Oberfläche im Bereich von 2 bis 3,5 m²/g aufweisen.

4. Verfahren zur Herstellung der Kobaltmetallagglomerate gemäß einem oder mehreren der Ansprüche 1 bis 3, dadurch gekennzeichnet, daß Kobaltsalze der allgemeinen Formel CoX₂, wobei X⁻ = Cl⁻, NO₃⁻ und/oder 1/2 SO₄²⁻bedeutet, kontinuierlich mit wässrigen Lösungen oder Suspensionen von Alkali- und/oder Ammoniumcarbonaten und/oder -hydrogencarbonaten bei Temperaturen zwischen 40 und 100°C, bevorzugt 60 bis 90°C in einem Durchflußrührreaktor unter Bildung von sphärischem, basischem Kobaltcarbonat umgesetzt werden, dieses abgetrennt und neutralsalzfrei gewaschen und anschließend mit Reduktionsmitteln zu den Kobaltmetallagglomeraten reduziert wird.

5. Verfahren gemäß Anspruch 4, dadurch gekennzeichnet, daß das neutralsalzfrei gewaschene Kobaltcarbonat vor der abschließenden Reduktion mit Alkali- und/oder Ammoniumlaugen zu sphärischem Kobalthydroxid umgesetzt wird.

6. Verfahren gemäß einem der Ansprüche 4 oder 5, dadurch gekennzeichnet, daß die Umsetzung mit gasförmigen Reduktionsmitteln bei Temperaturen zwischen 300 und 800°C, bevorzugt 350 und 650°C, durchgeführt wird

7. Verwendung der Kobaltmetallagglomerate gemäß einem oder mehreren der Ansprüche 1 bis 3 oder der nach dem Verfahren gemäß einem oder mehreren der Ansprüche 4 bis 6 hergestellten Kobaltmetallagglomerate zur Herstellung von Kobalt-Sinterkörpern,

8. Verwendung der Kobaltmetallagglomerate gemäß einem oder mehreren der Ansprüche 1 bis 3 oder der nach dem Verfahren gemäß einem oder mehreren der Ansprüche 4 bis 6 hergestellten Kobaltmetallagglomerate zur Herstellung von Verbundsinterkörpern auf Basis von Kobaltmetall und Hartstoffen aus der Gruppe Diamant, CBN, WC, SiC und Al₂O₃.

9. Verwendung der Kobaltmetallagglomerate gemäß einem oder mehreren der Ansprüche 1 bis 3 oder der nach dem Verfahren gemäß einem oder mehreren der Ansprüche 4 bis 6 hergestellten Kobaltmetallagglomerate als Komponente zur Herstellung der positiven Elektrode in alkalischen Sekundärbatterien basierend auf Nickel-Cadmium oder Nickel-Metallhydrid-Technologien.

## Claims

1. Cobalt metal agglomerates consisting of peanut-shaped primary particles with average particle sizes in the range from 0.5 to 2 µm, characterised in that they have a spherical secondary structure with average agglomerate diameters of 3 to 50 µm.

2. Cobalt metal agglomerates according to claim 1, characterised in that the agglomerate diameters are 5 to 20 µm.

3. Cobalt metal agglomerates according to one of claims 1 or 2, characterised in that they have a specific surface area in the range from 2 to 3.5 m²/g.

4. Process for the production of cobalt metal agglomerates according to one or more of claims 1 to 3, characterised in that cobalt salts of the general formula CoX₂, wherein X⁻ = Cl⁻, NO₃⁻ and/or ½ SO₄²⁻, are continuously reacted with aqueous solutions or suspensions of alkali metal and/or ammonium carbonates and/or hydrogen carbonates at temperatures of between 40 and 100°C, preferably from 60 to 90°C, in a continuous-flow stirred-tank reactor to form spherical, basic cobalt carbonate, this is separated and washed until free of neutral salt and then reduced with reducing agents to yield the cobalt metal agglomerates.

5. Process according to claim 4, characterised in that the cobalt carbonate which has been washed until free of neutral salt is converted into spherical cobalt hydroxide with alkali and/or ammonium liquors before the subsequent reduction.

6. Process according to one of claims 4 or 5, characterised in that the reaction with gaseous reducing agents is performed at temperatures of between 300 and 800°C, preferably of 350 and 650°C.

7. Use of the cobalt metal agglomerates according to one or more of claims 1 to 3, or of the cobalt metal agglomerates produced by the process according to one or more of claims 4 to 6, for the production of sintered cobalt articles.

8. Use of the cobalt metal agglomerates according to one or more of claims 1 to 3, or of the cobalt metal agglomerates produced by the process according to one or more of claims 4 to 6, for the production of composite sintered articles based on cobalt metal and hard materials from the group comprising diamond, CBN, WC, SiC and Al₂O₃.

9. Use of the cobalt metal agglomerates according to one or more of claims 1 to 3, or of the cobalt metal agglomerates produced by the process according to one or more of claims 4 to 6, as a component for the production of the positive electrode in alkaline secondary batteries based on nickel/cadmium or nickel/metal hydride technologies.

## Revendications

1. Agglomérés de cobalt métallique, constitués de particules primaires en forme de cacahuètes dont la taille moyenne est comprise dans la plage de 0,5 à 2 µm, caractérisés en ce qu'ils présentent une structure secondaire sphérique avec un diamètre moyen des agglomérés de 3 à 50 µm.

2. Agglomérés de cobalt métallique selon la revendication 1, caractérisés en en ce que le diamètre des agglomérés vaut de 5 à 20 µm.

3. Agglomérés de cobalt métallique selon l'une des revendications 1 ou 2, caractérisés en ce qu'ils présentent une surface spécifique comprise dans la plage de 2 à 3,5 m²/g.

4. Procédé pour la fabrication des agglomérés de cobalt métallique selon l'une ou plusieurs des revendications 1 à 3, caractérisé en ce que l'on fait réagir en continu des sels de cobalt de formule générale CoX₂, avec X⁻ = Cl⁻, NO₃⁻ et/ou ½ So₄²⁻, avec des solutions ou suspensions aqueuses de carbonates et/ou d'hydrogénocarbonates de métal alcalin et/ou d'ammonium à des températures comprises entre 40 et 100° C, de préférence entre 60 et 90° C, dans un réacteur agité traversé par ces solutions ou suspensions, pour former du carbonate basique de cobalt sphérique, en séparant ce dernier et en le lavant jusqu'à élimination des sels neutres, et ensuite en le réduisant en agglomérés de cobalt métallique à l'aide d'agents réducteurs.

5. Procédé selon la revendication 4, caractérisé en ce que le carbonate de cobalt lavé jusqu'à élimination des sels neutres est transformé en hydroxyde de cobalt sphérique avant la réduction qui suit par des solutions d'alcali et/ou d'ammonium.

6. Procédé selon l'une des revendications 4 ou 5, caractérisé en ce que la réaction est effectuée avec des agents réducteurs gazeux à des températures comprises entre 300 et 802° C, et de préférence entre 350 et 670° C.

7. Utilisation des agglomérés de cobalt métallique selon l'une ou plusieurs des revendications 1 à 3 ou des agglomérés de cobalt métallique fabriqués par le procédé selon l'une ou plusieurs des revendications 4 à 6 pour la fabrication de corps frittés en cobalt.

8. Utilisation des agglomérés de cobalt métallique selon l'une ou plusieurs des revendications 1 à 3 ou des agglomérés de cobalt métallique fabriqués par le procédé selon l'une ou plusieurs des revendications 4 à 6 pour la fabrication de corps composites à base de cobalt métallique et de matières dures du groupe constitué par le diamant, le CBN, le WC, le SiC et l'Al₂O₃.

9. Utilisation des agglomérés de cobalt métallique selon l'une ou plusieurs des revendications 1 à 3 ou des agglomérés de cobalt métallique fabriqués par le procédé selon l'une ou plusieurs des revendications 4 à 6 comme composants pour la fabrication des électrodes positives de batteries alcalines secondaires à la base des technologies au nickel - cadmium ou au nickel - hydrure métallique.
